# EUROPEAN PATENT APPLICATION

(11) **EP 4 645 451 A1**
(43) Date of publication of application: **05.11.2025**
(21) Application number: 23912650.1
(22) Date of filing: 06.12.2023
(51) Int. Cl.: H01M 4/36, H01M 4/525, H01M 4/505, H01M 4/62, H01M 4/131, H01M 10/052, C01G 53/00, H01M 4/02

(54) **METHOD FOR PREPARING POSITIVE ELECTRODE ACTIVE MATERIAL FOR LITHIUM SECONDARY BATTERY, POSITIVE ELECTRODE PREPARED BY USING SAME, AND LITHIUM SECONDARY BATTERY COMPRISING POSITIVE ELECTRODE**

(30) Priority: 26.12.2022 KR 20220184505
(71) Applicant: Research Institute of Industrial Science & Technology, Pohang-si, Gyeongsangbuk-do 37673 (KR); Posco Future M Co., Ltd., Pohang-si, Gyeongsangbuk-do 37918 (KR)
(72) Inventor: YU, Byongyong, Incheon 22003 (KR); NAM, Sang Cheol, Seoul 02587 (KR); PARK, Jong Il, Pohang-si, Gyeongsangbuk-do 37680 (KR); HONG, Ki Joo, Incheon 21986 (KR); LEE, Jiho, Incheon 22008 (KR); KIM, Ju Seong, Seoul 07542 (KR); NA, Sungmin, Seongnam-si, Gyeonggi-do 13120 (KR); PARK, Chanjoo, Seongnam-si, Gyeonggi-do 13120 (KR); PARK, Kwangjin, Seongnam-si, Gyeonggi-do 13120 (KR)
(74) Representative: Meissner Bolte Partnerschaft mbB
(86) International application number: PCT/KR2023/020024
(87) International publication number: WO 2024/143975

(57) **Abstract**

The present embodiments relate to a positive electrode active material for a lithium secondary battery and a lithium secondary battery comprising the same. A positive electrode active material for a lithium secondary battery according to one embodiment may include: a metal oxide composed of single particles; a first coating layer having a fiber shape and disposed on a surface of the metal oxide; and a second coating layer having a dot shape and disposed on the surface of the metal oxide.

## Description

### [Technical Field]

The present embodiments relate to a method for manufacturing a positive electrode active material for a lithium secondary battery, a positive electrode manufactured using the same, and a lithium secondary battery including the positive electrode.

### [Background Art]

With the rapid expansion of the lithium-ion battery market and the growing demand for high energy density, research on ternary positive electrode materials with high energy density and high areal capacity has been actively pursued.

Ternary positive electrode materials may develop micro-cracks inside the particles due to repeated lithium intercalation and deintercalation, which causes volumetric expansion. These micro-cracks can induce side reactions with the electrolyte at newly exposed surfaces, leading to a rapid decline in battery capacity.

In addition, to achieve high energy density, electrode density must be increased; however, during this process, secondary particles may collapse, which in turn promotes side reactions with the electrolyte. As a result, the initial cycle life of the battery can significantly deteriorate.

Accordingly, there is a need for the development of positive electrode materials capable of achieving high energy density without generating internal micro-cracks even after prolonged charge/discharge cycling.

### [Detailed Description of the Invention]

### [Technical Problem]

The present embodiment is directed to providing a positive electrode active material for a lithium secondary battery, a method for manufacturing the same, and a lithium secondary battery comprising the positive electrode active material, wherein the active material exhibits excellent electrical conductivity and electrochemical performance.

### [Technical Solution]

According to one embodiment, a positive electrode active material for a lithium secondary battery may include: a metal oxide composed of single particles; a first coating layer having a fiber shape and disposed on a surface of the metal oxide; and a second coating layer having a dot shape and disposed on the surface of the metal oxide.

According to one embodiment, a method for manufacturing a positive electrode active material for a lithium secondary battery may include: preparing a metal hydroxide comprising nickel, cobalt, and manganese; calcining a mixture of the metal hydroxide and a lithium raw material to obtain a metal oxide composed of single particles; forming a first coating layer on a surface of the metal oxide using a first coating layer precursor material; and forming a second coating layer on the surface of the metal oxide by feeding the metal oxide having the first coating layer into a mixing apparatus and mixing by a dry method.

According to one embodiment, a positive electrode may include: a current collector; and a positive electrode active material layer disposed on at least one surface of the current collector and comprising the positive electrode active material according to the above-described embodiment.

According to one embodiment, a lithium secondary battery may include the positive electrode.

### [Advantageous Effects of the Invention]

According to the present embodiment, a positive electrode active material with significantly improved electrical conductivity can be achieved by surface-treating a metal oxide composed of single particles with first and second coating layers having different morphologies. In addition, the positive electrode active material of the present embodiment exhibits excellent high-rate capability, long cycle life, and low resistance characteristics.

### [Brief Description of the Drawings]

FIG. 1 is a schematic diagram illustratively showing a positive electrode active material for a lithium secondary battery according to one embodiment.
FIG. 2 is an SEM image of the positive electrode active material of Example 1 taken at 50,000× magnification.
FIG. 3 is an SEM image of the positive electrode active material of Comparative Example 1 taken at 50,000× magnification.
FIG. 4 is an SEM image of the positive electrode active material of Example 1 taken at 3,000× magnification.
FIG. 5 is an SEM image of the positive electrode active material of Example 1 taken at 30,000× magnification.
FIG. 6 is an SEM image of the positive electrode active material of Comparative Example 1 taken at 3,000× magnification.
FIG. 7 is an SEM image of the positive electrode active material of Comparative Example 1 taken at 20,000× magnification.
FIG. 8 is an SEM image of the positive electrode active material of Comparative Example 2 taken at 3,000× magnification.
FIG. 9 is an SEM image of the positive electrode active material of Comparative Example 2 taken at 20,000× magnification.
FIG. 10 is an SEM image of the positive electrode active material of Example 1 taken at 30,000× magnification.
FIG. 11 is an enlarged view of area (1) marked in FIG. 10.
FIG. 12 is an enlarged view of area (2) marked in FIG. 10.
FIG. 13 shows the results of Raman analysis of the positive electrode active materials prepared in Example 1 and Comparative Example 1.
FIG. 14 shows the high-rate charge/discharge performance of the Example.
FIG. 15 shows the charge/discharge characteristics of the positive electrode active materials prepared in Example 1 and Comparative Example 1.
FIG. 16 shows the room temperature cycle retention performance of the positive electrode active materials prepared in Example 1 and Comparative Example 1.

### [Best Mode for Carrying Out the Invention]

The terms such as "first," "second," and "third," etc., may be used to describe various parts, components, regions, layers, and/or sections, but are not limited thereto. These terms are merely used to distinguish one element from another, and thus, a "first" element, component, region, layer, or section described below may be referred to as a "second" element, component, region, layer, or section without departing from the scope of the present invention.

The terminology used herein is intended to describe specific embodiments only and is not intended to limit the scope of the invention. The singular forms used herein include plural forms as well, unless the context clearly indicates otherwise. The term "comprising/including/involving/having" as used in this specification specifies the presence of stated features, regions, integers, steps, operations, elements, and/or components, but does not preclude the presence or addition of one or more other features, regions, integers, steps, operations, elements, and/or components.

When a part is referred to as being "on" or "above/over" another part, it may be directly on or over the other part, or intervening elements may be present therebetween. In contrast, when a part is referred to as being "directly on" or "directly above/over" another part, there are no intervening elements.

Unless otherwise defined, all terms including technical and scientific terms used herein have the same meanings as commonly understood by one of ordinary skill in the art to which this invention belongs. Commonly used dictionary terms should be interpreted in a manner consistent with their meanings in the relevant technical field and in the context of this disclosure, and are not to be interpreted in an idealized or overly formal sense unless expressly defined herein.

Unless otherwise specified, all percentages (%) are by weight, and 1 ppm means 0.0001 wt%.

Hereinafter, embodiments of the present invention will be described in detail to enable those skilled in the art to carry out the invention without undue experimentation. However, the present invention may be embodied in many different forms and is not limited to the embodiments described herein.

Detailed descriptions of each embodiment are as follows.

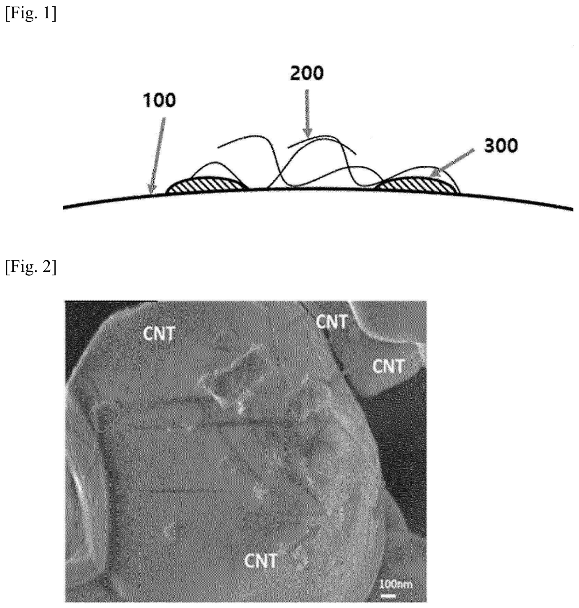

FIG. 1 is a schematic diagram illustrating, by way of example, a positive electrode active material for a lithium secondary battery according to one embodiment. Referring to FIG. 1, the positive electrode active material for a lithium secondary battery according to one embodiment may include: a metal oxide 100 composed of single particles; a first coating layer 200 having a fiber shape and disposed on the surface of the metal oxide; and a second coating layer 300 having a dot shape and disposed on the surface of the metal oxide.

In conventional ternary positive electrode active materials, secondary particles are composed of aggregated primary particles. However, such secondary particles suffer from microcrack generation during charge and discharge processes due to a decrease in particle strength as the nickel content increases. As described above, these micro-cracks cause undesirable side reactions with the electrolyte, which in turn result in increased gas generation. Therefore, the use of such materials in lithium-ion batteries for electric vehicles or energy storage systems remains challenging.

To address this, a strategy has been proposed in which the secondary particle structure is eliminated and instead the primary particle size is increased to form single particles (single crystalline), as opposed to polycrystalline aggregates. However, the single particle structure tends to exhibit low electrical conductivity due to the enlarged particle size, which limits the lithium intercalation and deintercalation rate and thus degrades battery performance.

In contrast, the present embodiment overcomes these issues by modifying the surface of the metal oxide with first and second coating layers having different morphologies. As a result, even with a single-particle structure, a positive electrode active material with significantly improved electrical conductivity can be achieved.

The first and second coating layers may comprise carbon. Since both the first and second layers include highly conductive carbon, the positive electrode active material according to the present embodiment exhibits excellent electrical conductivity.

Here, the fiber-shaped structure may have a diameter of 100 nm or less, and more specifically, from 10 nm to 100 nm. The fiber length may range from 10 nm to 30 µm, and more specifically, from 50 nm to 5 µm. When the fiber structure of the first coating layer falls within the above range, it can readily connect with the dot-shaped second coating layer, resulting in a highly conductive positive electrode active material.

In the present embodiment, the surface of the positive electrode active material may include from 1 to 20 dot-shaped structures per 1 µm². The dot-shaped second coating layer may be present in an island-like morphology. When present in this range, the second coating layer can effectively connect with the first coating layer, thereby further enhancing conductivity.

Additionally, the number of connections between the fiber and dot structures on the surface of the metal oxide may be in the range of 1 to 10 per 1 µm². When the first and second coating layers are connected within this range, the resulting positive electrode active material exhibits both excellent electrical conductivity and improved tap density.

In the positive electrode active material of the present embodiment, the weight ratio of the first coating layer to the second coating layer may be in the range of 1:99 to 99:1, and more specifically from 0.1:99.9 to 5.0:95. When this ratio is satisfied, the positive electrode active material can achieve superior electrical conductivity, high power performance, long cycle life, and low resistance characteristics.

The average particle diameter (D50) of the positive electrode active material may be in the range of 2 µm to 7 µm, and more specifically from 3 µm to 6 µm. When D50 falls within this range, gas generation can be suppressed, and electrochemical characteristics such as cycle life and resistance growth can be improved.

The electrical conductivity of the positive electrode active material may be 2.0 × 10⁻⁵ S/cm or more, and more specifically, in the range of 2.0 × 10⁻⁵ to 9.0 × 10⁻⁵ S/cm or 3.0 × 10⁻⁵ to 5.0 × 10⁻⁵ S/cm. As described above, due to the inclusion of both the first and second coating layers, the surface of the active material is modified, which significantly enhances electrical conductivity.

The tap density of the positive electrode active material may be 2.20 g/cc or more, and more specifically in the range of 2.20 g/cc to 2.6 g/cc. When the tap density falls within this range, electrochemical performance such as cycle life and resistance growth characteristics can be further improved.

In the present embodiment, the single particle may include at least one of: a single crystal structure composed of a single grain, or a monolith structure composed of an aggregation of 2 to 8 grains.

The metal oxide may include nickel, cobalt, and manganese. The nickel content may be 0.5 mol or more, based on the total of 1 mol of nickel, cobalt, and manganese. More specifically, the nickel content may be in the range of 0.6 mol to 0.99 mol, 0.8 mol to 0.99 mol, or 0.87 mol to 0.99 mol. When the nickel content is 0.5 mol or more, a high-power positive electrode active material can be achieved. When the nickel content is 0.8 mol or more, the resulting positive electrode active material can provide high volumetric energy density, thereby improving battery capacity and making it particularly suitable for use in electric vehicles.

The manganese content may be in the range of 0.01 mol to 0.1 mol, and more specifically from 0.01 mol to 0.06 mol, based on the total of 1 mol of nickel, cobalt, and manganese.

The cobalt content may also be in the range of 0.01 mol to 0.1 mol, and more specifically from 0.01 mol to 0.06 mol, based on the total of 1 mol of nickel, cobalt, and manganese.

According to one embodiment, a method for manufacturing a positive electrode active material for a lithium secondary battery may include the steps of: preparing a metal hydroxide comprising nickel, cobalt, and manganese; calcining a mixture of the metal hydroxide and a lithium raw material to obtain a metal oxide composed of single particles; forming a first coating layer on the surface of the metal oxide using a first coating layer precursor material; and forming a second coating layer on the surface of the metal oxide by introducing the metal oxide having the first coating layer into a mixing apparatus and performing a dry mixing process.

First, a metal hydroxide comprising nickel, cobalt, and manganese is prepared. In this embodiment, a metal salt aqueous solution including a nickel precursor, a cobalt precursor, a manganese precursor, and water is prepared and supplied to a co-precipitation reactor to obtain the metal hydroxide.

Next, the mixture of the metal hydroxide and lithium raw material is calcined to obtain a metal oxide composed of single particles. The molar ratio of lithium (Li) to total metal (Me) excluding lithium may be in the range of 1.0 to 1.1, or more specifically, from 1.01 to 1.08. The calcination may be performed at a temperature of 800°C to 900°C for 20 to 30 hours. When the calcination temperature and time fall within the above ranges, it is possible to produce a single-particle or monolithic-type positive electrode material.

Subsequently, a first coating layer is formed on the surface of the metal oxide using a first coating layer precursor material. The formation of the first coating layer may be carried out by an incipient wetness impregnation method.

The first coating layer precursor material may include a carbon source and a solvent. The solvent may include, for example, at least one selected from ethanol, deionized (DI) water, and N-methyl-2-pyrrolidone (NMP).

The carbon source may include, for example, carbon, carbon nanotubes (CNT), single-walled carbon nanotubes (SWCNT), and multi-walled carbon nanotubes (MWCNT), alone or in combination.

The formation of the first coating layer may be carried out such that the weight ratio of the metal oxide to the carbon source is in the range of 50:1 to 150:1. This weight ratio refers to the state after solvent removal following the formation of the first coating layer.

Next, the metal oxide having the first coating layer is introduced into a mixing apparatus and dry-mixed to form the second coating layer on the surface of the metal oxide.

The formation of the second coating layer may be performed using a mechano-fusion process. In this step, no additional carbon source is added; rather, the second coating layer is formed by subjecting the metal oxide already having the first coating layer to a second mechano-fusion mixing process.

Through this method, a positive electrode active material comprising a fiber-shaped first coating layer and a dot-shaped second coating layer formed on the surface of a single-particle metal oxide can be produced as in the present embodiment.

In one embodiment, a positive electrode may include a current collector and a positive electrode active material layer disposed on one surface of the current collector, wherein the active material layer comprises the positive electrode active material prepared as described above.

The characteristics of the positive electrode active material are as described above and will not be repeated here.

The current collector may be made of, for example, stainless steel, aluminum, nickel, titanium, sintered carbon, or aluminum or stainless steel surface-treated with carbon, nickel, titanium, silver, or the like.

The positive electrode active material layer may optionally include a binder and a conductive material. The binder improves adhesion between the active material particles and between the active material and the current collector.

Specific examples of the binder include polyvinylidene fluoride (PVDF), vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, ethylene-propylene-diene monomer rubber (EPDM rubber), sulfonated EPDM, styrene-butadiene rubber (SBR), fluororubber, or various copolymers thereof. One or more of these may be used in combination. The binder may be included in an amount of 1 to 30 wt% based on the total weight of the positive electrode active material layer.

The conductive material imparts electronic conductivity to the electrode and may be any material that does not cause chemical changes in the battery. Examples include: graphite (natural or artificial); carbon-based materials such as carbon black, acetylene black, ketjen black, channel black, furnace black, lamp black, thermal black, and carbon fibers; metal powders or fibers such as copper, nickel, aluminum, and silver; conductive whiskers such as zinc oxide and potassium titanate; conductive metal oxides such as titanium oxide; or conductive polymers such as polyphenylene derivatives. One or more of these may be used in combination. The conductive material may be included in an amount of 1 to 30 wt% based on the total weight of the positive electrode active material layer.

Except for using the above-described positive electrode active material, the positive electrode may be manufactured according to conventional methods.

Specifically, the positive electrode may be produced by coating a composition for forming a positive electrode active material layer-comprising the positive electrode active material, and optionally a binder, conductive material, and a solvent-on a current collector, followed by drying and roll pressing. The types and contents of the active material, binder, and conductive material are as described above.

The solvent may be any solvent commonly used in the art, such as dimethyl sulfoxide (DMSO), isopropyl alcohol, N-methylpyrrolidone (NMP), acetone, or water. One or more of these may be used in combination.

The amount of the solvent should be sufficient to dissolve or disperse the active material, binder, and conductive material, and provide a viscosity suitable for forming a coating with uniform thickness.

Alternatively, the positive electrode may be produced by casting the composition for forming the positive electrode active material layer onto a separate support, then peeling off the resulting film and laminating it onto the current collector.

According to one embodiment, a lithium secondary battery is provided that includes the above-described positive electrode.

The lithium secondary battery may specifically include a positive electrode, a negative electrode disposed opposite the positive electrode, a separator interposed between the positive electrode and the negative electrode, and an electrolyte. The positive electrode may be as described above. In addition, the lithium secondary battery may optionally further include a battery case housing the electrode assembly comprising the positive electrode, negative electrode, and separator, and a sealing member for sealing the battery case.

The negative electrode may include a negative electrode current collector and a negative electrode active material layer disposed on the current collector.

The negative electrode current collector is not particularly limited as long as it has high electrical conductivity and does not cause chemical reactions in the battery. Examples include copper, stainless steel, aluminum, nickel, titanium, sintered carbon, or copper or stainless steel surface-treated with carbon, nickel, titanium, or silver, as well as aluminum-cadmium alloys. The current collector typically has a thickness of 3 to 500 µm, and similar to the positive electrode collector, its surface may be roughened to enhance adhesion with the negative electrode active material. It may take various forms such as films, sheets, foils, nets, porous bodies, foams, or nonwoven fabrics.

The negative electrode active material layer may optionally include a binder and/or a conductive material along with the negative electrode active material. For example, the negative electrode active material layer may be formed by applying and drying a composition containing the negative electrode active material and optionally a binder and a conductive material onto the negative electrode current collector. Alternatively, the composition may be cast onto a separate support, and a film obtained by peeling it from the support may be laminated onto the negative electrode current collector.

The negative electrode active material may be a compound capable of reversibly intercalating and deintercalating lithium. Specific examples include carbonaceous materials such as artificial graphite, natural graphite, graphitized carbon fibers, and amorphous carbon; metal-based materials capable of alloying with lithium such as Si, Al, Sn, Pb, Zn, Bi, In, Mg, Ga, Cd, Si alloys, Sn alloys, or Al alloys; metal oxides capable of lithium doping/de-doping such as SiOₓ (0 < x < 2), SnO₂, vanadium oxide, and lithium vanadium oxide; or composites comprising the above metal-based materials and carbon materials, such as Si-C or Sn-C composites. One or more of these materials may be used in combination. A thin film of metallic lithium may also be used as the negative electrode active material.

Both low-crystallinity and high-crystallinity carbons may be used. Representative low-crystallinity carbons include soft carbon and hard carbon. High-crystallinity carbons include amorphous, plate-shaped, flake-type, spherical, or fibrous forms of natural or artificial graphite, Kish graphite, pyrolytic carbon, mesophase pitch-based carbon fibers, meso-carbon microbeads, mesophase pitches, and petroleum or coal tar pitch-derived cokes.

The binder and conductive material used in the negative electrode may be the same as those described above for the positive electrode.

A separator may be interposed between the positive and negative electrodes, depending on the battery type. The separator may include polyethylene, polypropylene, polyvinylidene fluoride, or multilayer films of two or more of these materials. Examples include polyethylene/polypropylene bilayer separators, polyethylene/polypropylene/polyethylene trilayer separators, and polypropylene/polyethylene/polypropylene trilayer separators.

The electrolyte may be selected from organic liquid electrolytes, inorganic liquid electrolytes, solid polymer electrolytes, gel-type polymer electrolytes, solid inorganic electrolytes, molten inorganic electrolytes, and the like, which may be used for lithium secondary battery applications.

Specifically, the organic liquid electrolyte may include an organic solvent and a lithium salt.

The organic solvent may serve as a medium for ion transport in electrochemical reactions and is not particularly limited. Specific examples include ester-based solvents such as methyl acetate, ethyl acetate, γ-butyrolactone, and ε-caprolactone; ether-based solvents such as dibutyl ether and tetrahydrofuran; ketone-based solvents such as cyclohexanone; aromatic hydrocarbon-based solvents such as benzene and fluorobenzene; carbonate-based solvents such as dimethyl carbonate (DMC), diethyl carbonate (DEC), methylethyl carbonate (MEC), ethylmethyl carbonate (EMC), ethylene carbonate (EC), and propylene carbonate (PC); alcohol-based solvents such as ethanol and isopropyl alcohol; nitrile-based solvents such as R-CN (where R is a linear, branched, or cyclic C₂-C₂₀ hydrocarbon group that may include double bonds, aromatic rings, or ether linkages); amide-based solvents such as dimethylformamide; dioxolanes such as 1,3-dioxolane; or sulfolanes.

Among these, carbonate-based solvents are preferred. More specifically, it is preferable to use a mixed solvent comprising a cyclic carbonate (e.g., ethylene carbonate or propylene carbonate) having high ionic conductivity and high dielectric constant to enhance battery performance, and a linear carbonate (e.g., EMC, DMC, or DEC) having low viscosity. The cyclic and linear carbonates may preferably be mixed at a volume ratio of about 1:1 to about 1:9.

The lithium salt may be any compound capable of supplying lithium ions used in lithium secondary batteries. Specific examples include LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB(C₂O₄)₂. The lithium salt is preferably used at a concentration of 0.1 to 2.0 M. Within this range, the electrolyte exhibits appropriate conductivity and viscosity, ensuring excellent electrolyte performance and effective lithium-ion mobility.

As described above, the lithium secondary battery including the positive electrode active material of the present invention exhibits excellent discharge capacity, power characteristics, and capacity retention, and is thus useful for applications in portable devices such as mobile phones, laptop computers, and digital cameras, as well as in electric vehicles such as hybrid electric vehicles (HEVs).

### [Mode for the Invention]

Hereinafter, embodiments of the present invention will be described in detail. However, these embodiments are provided by way of example only and are not intended to limit the scope of the invention, which is defined by the claims.

### Example 1 - Positive Electrode Active Material

### (1) Preparation of Precursor

A precursor was prepared using a conventional co-precipitation method.

Specifically, NiSO₄·6H₂O was used as the nickel source, CoSO₄·7H₂O as the cobalt source, and MnSO₄·H₂O as the manganese source. These raw materials were dissolved in distilled water to prepare a metal salt aqueous solution.

After preparing a co-precipitation reactor, nitrogen (N₂) was purged to prevent oxidation of metal ions, and the reactor temperature was maintained at 50°C.

NH₄OH was added as a chelating agent, and NaOH was used for pH adjustment. The resulting precipitate from the co-precipitation process was filtered, washed with distilled water, and dried at 100°C for 24 hours to obtain a positive electrode active material precursor.

The composition of the precursor was (Ni_{0.88}Co_{0.07}Mn_{0.05})(OH)₂, and the average particle diameter (D50) ranged from 3 µm to 14 µm.

### (2) Preparation of Positive Electrode Active Material

The precursor obtained in step (1) was uniformly mixed with LiOH·H₂O and calcined at 800-900°C for 24 hours in a box-type furnace under an oxygen flow of 1000 mL/min to obtain a metal oxide (Li(NCM)O₂) having a single-crystal structure.

A first coating layer was formed on the surface of the metal oxide using an ethanol mixture containing 0.5 wt% CNT via incipient wetness impregnation.

Specifically, the weight ratio of metal oxide to CNT was adjusted to 100:1, and the solvent was completely evaporated at 120°C.

Thereafter, the metal oxide having the first coating layer was introduced into a mechano-fusion apparatus and dry-mixed to form the second coating layer, thereby producing a positive electrode active material having both fiber-shaped and dot-shaped carbon coatings.

### Example 2

A positive electrode active material was prepared in the same manner as in Example 1, except that the ethanol mixture used for forming the first coating layer contained 1 wt% CNT.

### Example 3

A positive electrode active material was prepared in the same manner as in Example 1, except that the ethanol mixture used for forming the first coating layer contained 1.5 wt% CNT.

### Comparative Example 1

### (1) Preparation of Precursor

The precursor was prepared in the same manner as in Example 1.

### (2) Preparation of Positive Electrode Active Material

The precursor prepared in step (1) was uniformly mixed with LiOH·H₂O and calcined at 800-900°C for 24 hours in a box-type furnace under an oxygen flow of 1000 mL/min to prepare a positive electrode active material comprising Li(NCM)O₂ with a single-crystal structure.

### Comparative Example 2

### (1) Preparation of Precursor

The precursor was prepared in the same manner as in Example 1.

### (2) Preparation of Positive Electrode Active Material

The precursor prepared in step (1) was uniformly mixed with LiOH·H₂O and calcined at 800-900°C for 24 hours in a box-type furnace under an oxygen flow of 1000 mL/min to obtain Li(NCM)O₂.

Then, 0.5 wt% of CNT was added directly to the surface of the metal oxide, and a dry mixing process was performed to produce the positive electrode active material.

### Experimental Example 1 - SEM Analysis

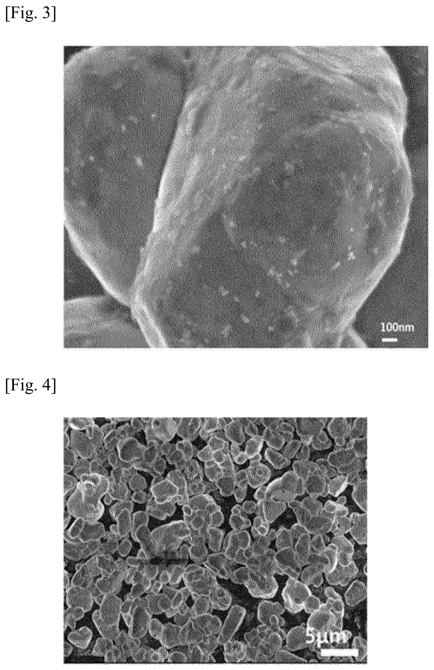

FIG. 2 shows the SEM image of the positive electrode active material of Example 1 at 50,000× magnification, and FIG. 3 shows that of Comparative Example 1.

Referring to FIG. 2, the positive electrode active material of Example 1 includes both a fiber-shaped first coating layer and a dot-shaped second coating layer well-formed on the metal oxide surface.

In contrast, as shown in FIG. 3, the positive electrode active material of Comparative Example 1 does not exhibit any observable coating layers.

Further SEM observations were conducted for both Example 1 and Comparative Example 1.

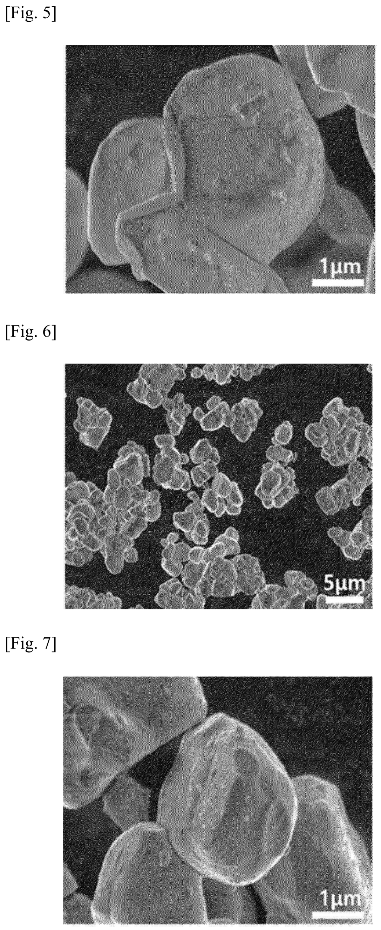

FIG. 4 is an SEM image of Example 1 at 3,000× magnification; FIG. 5 at 30,000×.

FIG. 6 is an SEM image of Comparative Example 1 at 3,000×; FIG. 7 at 20,000×.

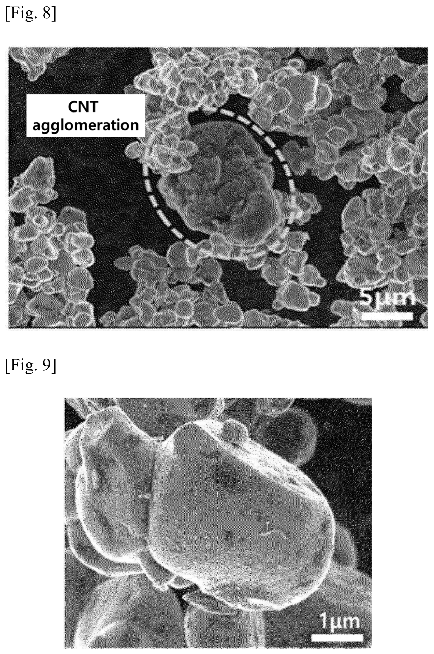

FIG. 8 is an SEM image of Comparative Example 2 at 3,000×; FIG. 9 at 20,000×.

From the low-magnification SEM images (FIGS. 4, 6, and 8), it can be seen that the CNTs in Example 1 are evenly distributed on the surface. However, in Comparative Example 2, CNTs are unevenly distributed and show signs of agglomeration.

From the high-magnification images (FIGS. 5, 7, and 9), it is confirmed that the active material in Example 1 exhibits both fiber-shaped and dot-shaped coatings well distributed on the surface. In Comparative Example 1, no coating is observed, and in Comparative Example 2, CNTs are aggregated, resulting in non-uniform coating formation.

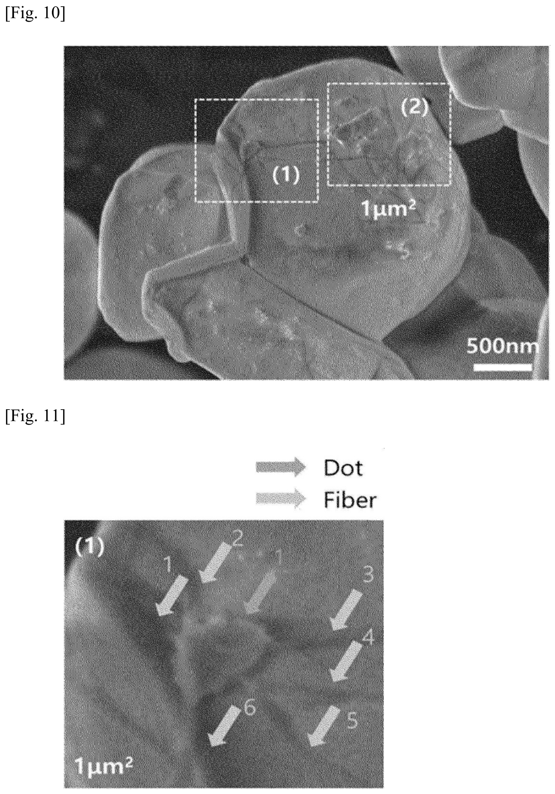

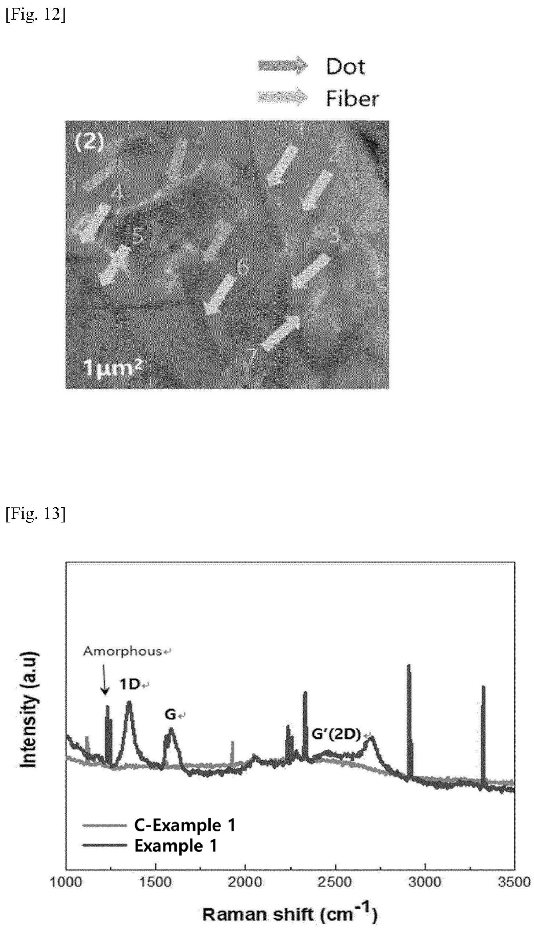

FIG. 10 is another SEM image of the positive electrode active material of Example 1 at 30,000× magnification. FIGS. 11 and 12 are enlarged views of areas (1) and (2) marked in FIG. 10, respectively.

Referring to FIGS. 10 through 12, it is again confirmed that both fiber-shaped and dot-shaped coatings are present on the surface of the positive electrode active material of Example 1.

### Experimental Example 2 - Raman Analysis

Raman analysis was performed on the positive electrode active materials prepared in Example 1 and Comparative Example 1, and the results are shown in FIG. 13.

Raman spectra were measured using a Confocal Raman Microscope (SENTERRA II, Bruker) with an excitation wavelength of 532.06 nm, ND filter of 40.97%, and spectrograph center wavenumber of 2450.00 cm⁻¹.

Referring to FIG. 13, no carbon-related peaks were observed in the sample of Comparative Example 1, whereas the material of Example 1 showed characteristic peaks in the ranges of 1200-1700 cm⁻¹ and 2300-2700 cm⁻¹, confirming the presence of carbonaceous coatings.

### Experimental Example 3 - Electrical Conductivity Measurement

Electrical conductivity was measured using the positive electrode active material powders prepared in Example 1 and Comparative Examples 1 and 2.

Specifically, 0.5 g of each powder was sieved and compressed into pellets using a 12 mm mold under 10 bar of pressure for 20 minutes.

The resistance of the resulting pellets was measured by the four-point probe method using a CMT Series system (Changmin Tech). Electrical conductivity was calculated as the reciprocal of the measured resistance. The results are shown in Table 1 below.

**[Table 1]**

| Electrical conductivity | Example 1 | Comparative Example 1 | Comparative Example 2 |
|---|---|---|---|
| Resistivity (Ω·cm) | 2.81 x 10⁴ | 6.90 x 10⁵ | 1.03 x 10⁵ |
| Electrical Conductivity (S/cm) | 3.56 x 10⁻⁵ | 1.45 x 10⁻⁶ | 9.68 x 10⁻⁶ |

Referring to Table 1, it was confirmed that the electrical conductivity of the positive electrode active material prepared in Example 1 was significantly improved compared to those of Comparative Examples 1 and 2.

### Experimental Example 4 - Electrochemical Performance Evaluation

### (1) Coin-Type Half-Cell Fabrication

CR2032 coin cells were fabricated using the positive electrode active materials prepared in the above Examples and Comparative Examples, followed by electrochemical evaluation.

Specifically, the positive electrode active material, conductive agent (Super P), and polyvinylidene fluoride (PVdF) binder were mixed in a weight ratio of 96:2:2. The mixture was added to N-methyl-2-pyrrolidone (NMP) to prepare a positive electrode slurry with a solid content of approximately 30 wt%.

The slurry was coated onto an aluminum foil current collector (thickness: 15 µm) using a doctor blade, dried under vacuum at 120°C for 5 hours, and roll-pressed to fabricate the positive electrode.

The positive electrode, a lithium metal counter electrode (thickness: 300 µm, MTI), an electrolyte, and a polypropylene separator were assembled into CR2032 coin-type half cells using conventional methods.

The electrolyte was a mixed solution of 1 M LiPF₆ dissolved in a solvent mixture of ethylene carbonate (EC), dimethyl carbonate (DMC), and ethyl methyl carbonate (EMC) at a volume ratio of EC:DMC:EMC = 3:4:3. The fabricated coin cells were aged for 12 hours at room temperature before electrochemical measurements were performed.

### (2) High-Rate Performance Evaluation

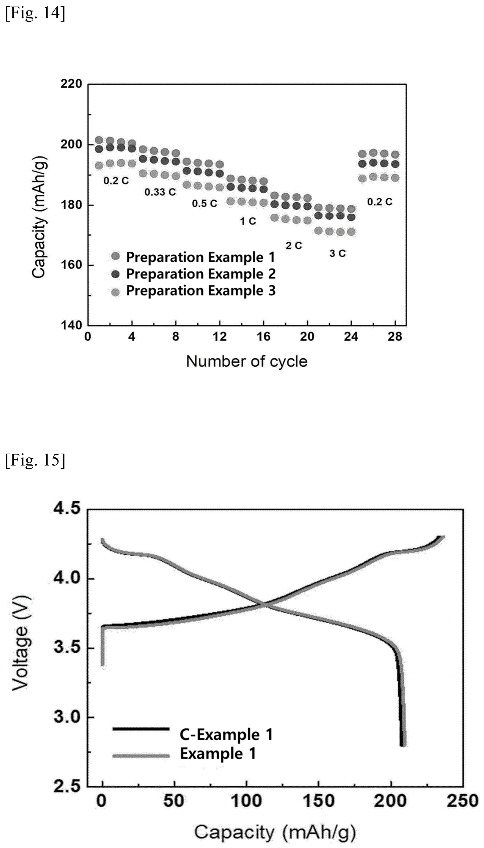

High-rate charge/discharge performance of the coin cells fabricated in step (1) was evaluated. The results are shown in FIG. 14.

The tests were conducted in a temperature-controlled chamber at 25°C under a voltage range of 3.0-4.3 V. Specifically, charge/discharge cycles were repeated four times each under current conditions of 0.2C, 0.33C, 0.5C, 1C, 2C, 3C, and back to 0.2C.

### (3) Charge/Discharge Capacity Evaluation

The theoretical capacity was set at 200 mAh/g. Charge/discharge conditions were constant current/constant voltage (CC/CV) at 2.8 V to 4.3 V with a 1/20C cutoff. The initial capacity was measured at 0.1C charge / 0.1C discharge. The results are shown in FIG. 15 and Table 2 below.

### (4) Room-Temperature Cycle Retention

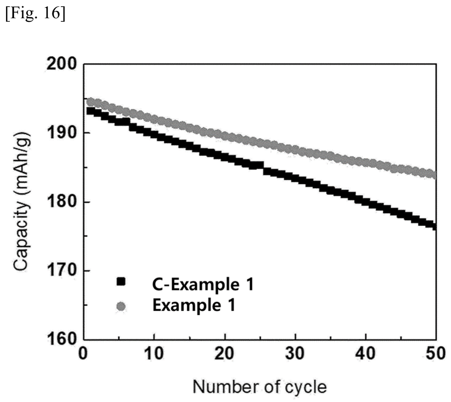

Following a formation cycle conducted at 0.1C (constant current) within 2.8-4.3 V at 25°C, subsequent charge/discharge cycles were performed at 1C. Cycle retention was calculated based on the discharge capacity at the 50th cycle relative to the 1st cycle. The results are shown in FIG. 16 and Table 2 below.

### (5) High-Temperature Resistance Increase Rate

To evaluate internal resistance, each cell was fully charged to 100% at 4.3 V at 45°C. Then, after applying a discharge current, the voltage at 60 seconds was measured to determine the initial high-temperature resistance (DC-IR). After 50 charge/discharge cycles at 45°C, the resistance was measured again using the same method, and the resistance increase rate was calculated as a percentage relative to the initial value.

### (6) Tap Density (T/D) Measurement

For both the positive electrode active material powders of Example 1 and Comparative Example 1, 10 g of powder was weighed and loaded into a dedicated container. The powder was tapped 3,000 times, and the resulting volume was measured. The tap density was calculated by dividing the mass by the volume. A JEL STAV II Jolting Volumeter was used for this measurement.

**[Table 2]**

| **Property** | Charge Capacity (0.1C) (mAh/g) | Discharge Capacity (0.1C) (mAh/g) | Room-Temperature Cycle Retention (%) | High-Temperature Resistance Increase Rate (%) | Tap Density (T/D) (g/cc) |
|---|---|---|---|---|---|
| Example 1 | 234 | 207 | 95 | 61.7 | 2.24 |
| Comparative Example 1 | 236 | 209 | 91.3 | 86.9 | 2.19 |

Referring to FIG. 14, although the CNT content increases in the order of Example 1, Example 2, and Example 3, it was confirmed that the positive electrode active material of Example 1 exhibited the highest capacity and rate performance. Specifically, the capacity retention ratio at high rate (3C) compared to low rate (0.2C) was 87.6%, indicating excellent performance.

Referring to FIG. 15 and Table 2, it was confirmed that the positive electrode active material of Example 1 achieved a higher initial charge/discharge capacity compared to the positive electrode active material of Comparative Example 1.

Referring to FIG. 16 and Table 2, it was found that the positive electrode active material of Example 1 exhibited relatively smaller degradation in cycle life compared to the positive electrode active material of Comparative Example 1. Furthermore, it was confirmed that the capacity retention at the 50th discharge of Example 1 was 95.0% relative to the first discharge capacity, which was significantly superior to 91.3% of Comparative Example 1.

In addition, referring to Table 2, it was confirmed that the positive electrode active material of Example 1 exhibited a significantly reduced increase in high-temperature resistance compared to the positive electrode active material of Comparative Example 1.

The tap density of the positive electrode active material of Example 1 was also confirmed to be significantly superior to that of Comparative Example 1.

The present invention is not limited to the foregoing examples but may be embodied in various other forms without departing from the spirit or essential characteristics of the invention as understood by those skilled in the art. Therefore, the embodiments described above should be considered as illustrative in all respects and not restrictive.

### (Description of Reference Numerals)

100: Metal oxide
200: First coating layer
300: Second coating layer

## Claims

1. A positive electrode active material for a lithium secondary battery, comprising:
a metal oxide composed of single particles;
a first coating layer having a fiber shape and disposed on a surface of the metal oxide; and
a second coating layer having a dot shape and disposed on the surface of the metal oxide.

2. The positive electrode active material for a lithium secondary battery of claim 1,
wherein the first coating layer and the second coating layer comprise carbon.

3. The positive electrode active material for a lithium secondary battery of claim 1,
wherein a diameter of the fiber-shaped structure is 100 nm or less.

4. The positive electrode active material for a lithium secondary battery of claim 1,
wherein a length of the fiber-shaped structure is in a range from 10 nm to 30 µm.

5. The positive electrode active material for a lithium secondary battery of claim 1,
wherein the positive electrode active material comprises from 1 to 20 dot-shaped structures per 1 µm² of the surface.

6. The positive electrode active material for a lithium secondary battery of claim 1,
wherein a number of fiber-dot connections per 1 µm² of the metal oxide surface is in a range from 1 to 10.

7. The positive electrode active material for a lithium secondary battery of claim 1,
wherein a weight ratio of the first coating layer to the second coating layer is in a range from 1:99 to 99:1.

8. The positive electrode active material for a lithium secondary battery of claim 1,
wherein an average particle diameter (D50) of the positive electrode active material is in a range from 2 µm to 7 µm.

9. The positive electrode active material for a lithium secondary battery of claim 1,
wherein an electrical conductivity of the positive electrode active material is 2.0 × 10⁻⁵ S/cm or more.

10. The positive electrode active material for a lithium secondary battery of claim 1,
wherein a tap density of the positive electrode active material is 2.20 g/cc or more.

11. The positive electrode active material for a lithium secondary battery of claim 1,
wherein the single particle comprises at least one of: a single crystal structure composed of a single particle; and a monolith structure composed of an aggregation of 2 to 8 particles.

12. The positive electrode active material for a lithium secondary battery of claim 1,
wherein the metal oxide comprises nickel, cobalt, and manganese.

13. The positive electrode active material for a lithium secondary battery of claim 12,
wherein a content of nickel in the metal oxide is 0.5 mol or more based on 1 mol of a total amount of nickel, cobalt, and manganese.

14. A method for manufacturing a positive electrode active material for a lithium secondary battery, comprising:
preparing a metal hydroxide comprising nickel, cobalt, and manganese;
calcining a mixture of the metal hydroxide and a lithium raw material to obtain a metal oxide composed of single particles;
forming a first coating layer on a surface of the metal oxide using a first coating layer precursor material; and
forming a second coating layer on the surface of the metal oxide by feeding the metal oxide having the first coating layer into a mixing apparatus and mixing by a dry process.

15. The method of claim 14,
wherein the forming of the first coating layer is performed by an incipient wetness impregnation method.

16. The method of claim 14,
wherein the first coating layer precursor material comprises a carbon source and a solvent.

17. The method of claim 16,
wherein the solvent comprises at least one selected from ethanol, deionized (DI) water, and N-methyl-2-pyrrolidone (NMP).

18. The method of claim 16,
wherein the forming of the first coating layer is performed such that a weight ratio of the metal oxide to the carbon source is in a range from 50:1 to 150:1.

19. The method of claim 14,
wherein the forming of the second coating layer is performed by a mechano-fusion process.

20. The method of claim 16,
wherein the carbon source comprises at least one selected from carbon, carbon nanotube (CNT), single-walled carbon nanotube (SWCNT), and multi-walled carbon nanotube (MWCNT).

21. The method of claim 14,
wherein the calcining to obtain the metal oxide is performed at a temperature in a range from 800°C to 900°C for 20 to 30 hours.

22. A positive electrode for a lithium secondary battery, comprising:
a current collector; and
a positive electrode active material layer disposed on at least one surface of the current collector and comprising the positive electrode active material of any one of claims 1 to 13.

23. A lithium secondary battery comprising the positive electrode of claim 22.
